# EUROPEAN PATENT APPLICATION

(11) **EP 2 725 499 A1**
(43) Date of publication of application: **30.04.2014**
(21) Application number: 12189974.4
(22) Date of filing: 25.10.2012
(51) Int. Cl.: G06F 13/42

(54) **Method for assigning dynamically an identifier to a slave device in I2C data bus**

(71) Applicant: Telefónica, S.A., 28013 Madrid (ES)
(72) Inventor: Zorzano Mier, Francisco, Javier, 28013 Madrid (ES); Del Peral Chico, David, 28013 Madrid (ES)
(74) Representative: Carpintero Lopez, Francisco

(57) **Abstract**

Present invention refers to a method for assigning dynamically an identifier to a slave device connected to a I2C bus. The method comprises the steps of: a master device connected to the I2C bus, being said master device temporarily identified by a first identifier previously known; the slave device blocking the I2C bus; the slave device using the first identifier to identify the master device and asking for a second identifier; the master device assigning the second identifier to the slave device; the master registering as occupied the second identifier assigned to the slave; the master device sending the second identifier assigned to the slave device to the slave device through the I2C bus; and the master device stops being identified by the first identifier.

## Description

### TECHNICAL FIELD OF THE INVENTION

The present invention relates generally to assigning identifiers to a slave devices connected to a data bus, and more specifically, the invention refers to a method for assigning dynamically identifiers to slave devices connected to a 12C bus to be reached by a master device with any previous configuration.

### BACKGROUND OF THE INVENTION

12C is a widely used physical and link protocol to communicate electronic components in the same circuit board. It was created by Phillips in the early '80s.
In 12C there are two kinds of devices: masters and slaves. The 12C bus is a multimaster bus which means that any number of master devices can be present. Additionally, master and slave roles may be changed between messages.
All devices are connected to three lines: GND (ground), SDA (data line) and SCL (clock), but actually the ground line is not required most of the times as circuits sharing a same board are connected, so they are also sharing the ground.
The 12C protocol determines certain mechanisms for sharing the bus. The masters have no identifier, but every slave has an identifier, which is a 7 bit or 10 bit number (depending on protocol version).
Master devices initiate communication selecting a slave, writing its address in the 12C bus and then sending the information to the slave or "reading" information from it.
About how the addresses are assigned to slaves and how do masters know what slaves are connected, a couple of configurations are disclosed in prior art.
The most typical solution is to have a fixed address for every slave device, out of factory. Masters are programmed to locate every slave in its assigned address. Problem arises when two makers write the same address in different devices, which is probable as there are many more device types than identifiers.
Another problem appears when a master has to control two different slaves of the same kind, thus with the same address.
That solution does not allow a dynamic configuration. This means that, out of factory, the programmer of the master has to know exactly which slaves will be connected. Devices cannot be connected or disconnected after the master is programmed, without damaging the software. Otherwise, some other methods allow plugging and unplugging 12C slaves to the bus, assigning them different identifiers dynamically.
One option is to configure the slave ID mechanically, through jumpers or small selectors. This operation is an extra problem for users and not really plug-and-play. Users have to make sure that slave IDs are not repeated. IDs have to be introduced also in the master.
In US6629172**,** it is proposed a solution where several slaves share the same ID. Said slaves are intercommunicated through an extra signal following a line. When the first slave in the row talks with the master, it tells the other slaves to block communications using the signal. When it has talked it blocks and lets the next slave talk (blocking the next ones). This method requires an extra wire to communicate the slaves.
In US7249209 an extra wire is also used. Slaves use this wire to communicate between them. Each slave gives information to the next one which is used to generate its own address.
US8040215 proposes to read the Vcc voltage to detect the current drained by the other slaves, thus deducing how many slaves and calculating its own address. This functionality supposes extra hardware and connections to finely measured the Vcc.
US6745270 proposes to put switches between the slaves. Once the slaves have decided on an address, the switches are open for communication. These switches are extra hardware.

In all the previously documents, the available methods/systems have extra hardware to assign dynamically the identifiers to the slaves or they depend on reading the Vcc voltage for deducing the number of slaves. Therefore, the prior art is missing an efficient method for assigning dynamically the identifiers to the slaves with no extra hardware and allowing any number of devices connected to the 12C bus, where the master, which is also connected to the same 12C bus, does not need any previous identifier configuration.

### SUMMARY OF THE INVENTION

Present invention serves to solve the aforesaid problem by providing a method that no requires extra wires, nor analyzing any signal, nor extra hardware. The slaves does not need to be assigned an identifier as they are build, but the identifier are provided when they connect to a 12C bus.
One aspect of present invention refers to a method for assigning dynamically an identifier to a slave device connected to a 12C bus, the method comprising the steps of:
a) a master device connected to the 12C bus, being said master device temporarily identified by a first identifier previously known;
b) the slave device blocking the 12C bus;
c) the slave device using the first identifier to identify the master device and asking for a second identifier;
d) the master device assigning the second identifier to the slave device;
e) the master registering as occupied the second identifier assigned to the slave;
f) the master device sending the second identifier assigned to the slave device to the slave device through the 12C bus;
g) the master device stops being identified by the first identifier.

The method of the invention may be applied taking advantage of idle periods of master devices and, according to one particular embodiment, the invention may comprise the step of checking if the 12C bus is busy, and in the case of the 12C bus is busy, the slave device waits to block the 12C bus until the 12C bus stop being busy.
Some embodiments of the invention may comprise a plurality of slave devices connected to the 12C bus, in that case the master devices assigns a plurality of identifiers to the plurality of slave devices, being said identifiers unique.

Address collisions are prevented in some particular embodiments of the invention according to 12C multimaster protocol.

Another aspect of the invention refers to a system for assigning dynamically identifiers on a data bus, the system comprises:
- at least one master device connected to the 12C bus being identified temporarily by a first identifier previously known, wherein the master device assigns a second identifier to a slave, sends said second identifier to the slave and registers the second identifier as occupied;
- at least one slave device connected to the 12C bus which communicates with the master device through the first identifier previously known, the slave device blocks the 12C bus and takes the second identifier sent by the master device.

The system may comprise a plurality of devices connected to 12C bus as slave devices and the plurality of devices may comprise, in turn, sensors and actuators.

Referring to the master device, in some embodiment of the invention it is comprised that the master device is a microprocessor. Additionally both the master devices and the slave devices are multimaster devices in some embodiments of the invention.

The above features and advantages do not limit the present invention, and those skilled in the art will recognize additional features and advantages upon reading the following detailed description and upon viewing the accompanying drawings.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1** depicts a scheme of the components of a common 12C bus.
**Figure 2** depicts a scheme of a slave and a master exchanging messages.
**Figure 3** shows a scheme of the last steps of the method of the invention.
**Figure 4** depicts a scheme of the final configuration of one embodiment of the invention.

### DETAILED DESCRIPTION OF THE INVENTION

This invention describes a process for assigning dynamically an identifier to a slave device connected to a 12C bus. A key aspect for proposed invention lies in how the master and slaves devices change their roles. Thus, it is possible to assign the identifiers as the slaves are connected to the 12C bus just by asking the master device, which since is keeping a record of occupied identifiers, assigns free identifiers to the slaves correlatively.

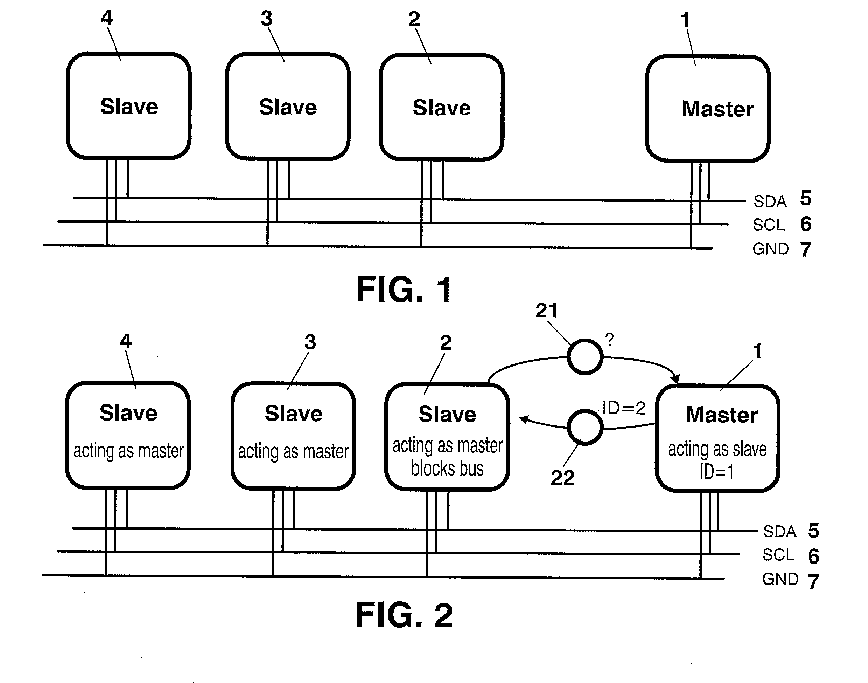

Figure 1 shows one embodiment of the invention according to a typical configuration comprised by:
- a master device (1): the one which will, in a regular operation, be the 12C master, managing all communications with the other devices.
- slaves (2,3,4): these are the peripherals, the devices that, in a regular operation, only read and write when it is ordered by the master device.
- a 12C bus: comprised by the lines of data SDA (5), clock SCL (6) and ground GND (7).

Anyway multiples embodiments of the inventions may be derived, but according to this embodiment, it is disclosed a solution where the module which is going to be master (1) runs, when it is idle, as a provisional slave with a fixed known identifier such as ID=1.
When a module (2) which is going to be a slave starts up, it starts as a provisional master. Assuming the role of a master, this module (2) block the 12C bus and opens communication with the module (1) using the identifier ID=1, which is going to be master (but now is assuming the role of a slave with the identifier ID=1) and asks (21) for an identifier. Then, the master (1) answers (22) with a single byte, for example ID=2, holding the slave identifier. This is described in figure 2. The master, when it is acting as a provisional slave can receive requests from the connecting slaves, which are acting as provisional masters.

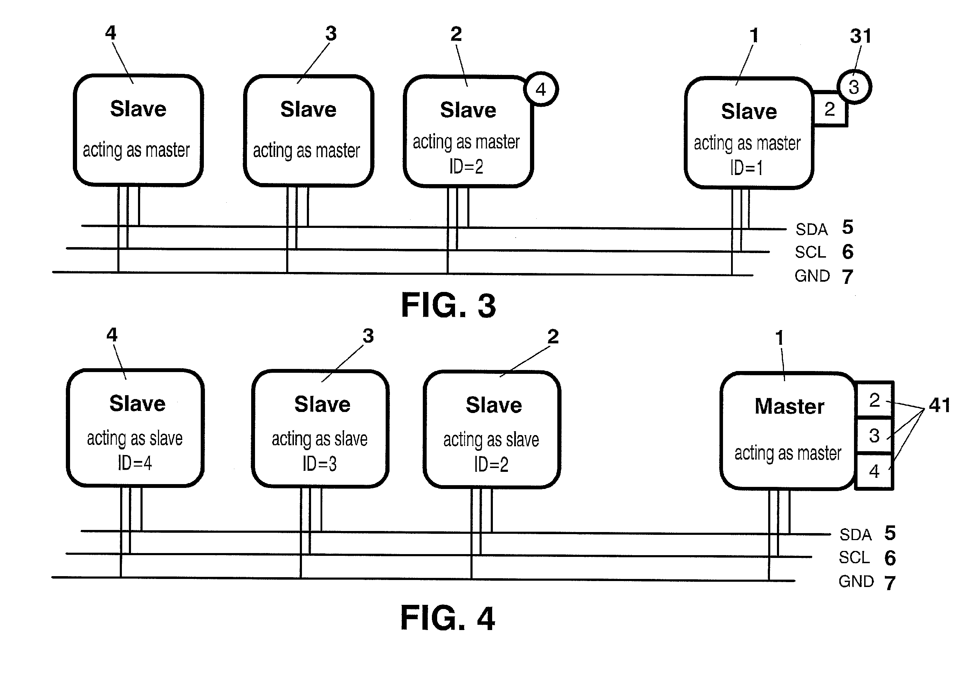

Figure 3 shows the last steps of the method of proposed invention for this particular embodiment. After master device (1) answer (22) to the slave device (2) with an identifier, for example ID=2, the master devices registers (31) the identifier assigned as an identifier occupied. Then the slave device becomes a stable slave with the provided identifier and stop playing the role of a master device as it already has an identifier given by the master device (1). The identifiers may be assigned consecutively by the master according to one embodiment or they can be assigned after checking an internal table for available registers.

Identifiers are given to slaves correlatively. The identifiers given by the master (1) to slave devices are always free identifiers and all the identifiers assigned to slaves are recorded. Thus the master devices have the information of how many slaves have been connected.

According to one embodiment of the invention, any additional device connected to the 12C bus is assuming the role of a master device until it receives an identifier. While the master device is not idle, the slaves wait in a master mode. Once the master is idle, it starts running as a slave using a previously known identifier and the "real" slaves that were waiting in a master mode are now capable to reach the master in order to carry out the whole process of assigning the identifiers.

Figure 4 shows a final configuration according to one embodiment of the invention where the process have already finish and some slaves (2, 3, 4) are running as slaves with the identifiers assigned by the master device (1). Being the identifiers assigned to the salves recorded (41) in the master device.

Once the process has ended the master device is ready to become temporarily a slave again as soon and it is idle.

There are 12C environments where multiple masters are sharing the bus.
In such case each device needs to be able to cooperate with the fact that another device is currently talking and the bus is therefore busy.
In power-up situations collisions are solved by proposed invention through the multimaster protocol used in 12C. This protocol allows also to plug-in slaves without rebooting the full system.
It is essential that all devices are multimasters. A single-master is simply a device, which does not understand the mechanisms for recognizing traffic and waiting for a stop condition to appear before starting to talk on the bus. If a singlemaster and a multimaster are connected, the singlemaster may well interrupt the multimaster causing unpredictable results.

## Claims

1. Method for assigning dynamically an identifier to a slave device connected to a 12C bus, the method comprising the steps of:
a) a master device connected to the 12C bus, being said master device temporarily identified by a first identifier previously known;
b) the slave device blocking the 12C bus;
c) the slave device using the first identifier to identify the master device and asking for a second identifier;
d) the master device assigning the second identifier to the slave device;
e) the master registering as occupied the second identifier assigned to the slave;
f) the master device sending the second identifier assigned to the slave device to the slave device through the 12C bus;
g) the master device stops being identified by the first identifier.

2. Method according to claim 1 further comprising the step of checking if the 12C bus is busy, and in the case of the 12C bus is busy, the slave device waits to block the 12C bus until the 12C bus stop being busy.

3. Method according to previous claims wherein the master device assigns a plurality of identifiers to a plurality of slave devices, but the identifiers are unique.

4. Method according to any one of previous claims wherein in the case of two or more devices collision, the collision is solved according to 12C multimaster protocol.

5. System for assigning dynamically identifiers on a data bus, the system comprises:
- at least one master device connected to the 12C bus being identified temporarily by a first identifier previously known, wherein the master device assigns a second identifier to a slave, sends said second identifier to the slave and registers the second identifier as occupied;
- at least one slave device connected to the 12C bus which communicates with the master device through the first identifier previously known, the slave device blocks the 12C bus and takes the second identifier sent by the master device.

6. System according to claim 5.- further comprising a plurality of devices connected to the 12C bus configured as slave devices.

7. System according to claim 6 wherein the plurality of devices comprises sensors and actuators.

8. System according to any one of claims 5-7, wherein the master device is a microprocessor.

9. System according to any one of claims 5-8, wherein the slaves and master devices are multimaster devices.
